# EUROPEAN PATENT APPLICATION

(11) **EP 2 949 519 A1**
(43) Date of publication of application: **02.12.2015**
(21) Application number: 13872626.0
(22) Date of filing: 13.06.2013
(51) Int. Cl.: B60R 21/207, B60R 21/233, B60R 21/239

(54) **VEHICLE SIDE AIR-BAG DEVICE**

(30) Priority: 23.01.2013 JP 2013010337
(71) Applicant: TOYOTA JIDOSHA KABUSHIKI KAISHA, Toyota-shi, Aichi-ken, 471-8571 (JP)
(72) Inventor: FUJIWARA, Yusuke, Toyota-shi Aichi 471-8571 (JP)
(74) Representative: TBK
(86) International application number: PCT/JP2013/066399
(87) International publication number: WO 2014/115351

(57) **Abstract**

Body parts from the shoulder to the waist of a seated occupant are appropriately restrained by restraining forces corresponding to the load tolerances of the body parts.

In a side airbag (20) of a side airbag device (10), a rear bag portion (26) in which an inflator (22) is provided is inflated and deployed earlier than a front bag portion (24) such that the internal pressure in the rear bag portion (26) is higher than that in the front bag portion (24). Thus, while a shoulder (S) and the rear portions of a chest (C) and an abdomen (B), which have a relatively high load tolerance, are restrained by the rear bag portion (26) early, the front portions of the chest (C) and the abdomen (B), which have a relatively low load tolerance, are softly restrained by the front bag portion (24). In addition, a waist (L) having a load tolerance higher than that of the shoulder (S), the chest (C), and the abdomen (B) of the seated occupant (P) is restrained by a lower bag portion (28). When the internal pressure in the lower bag portion (28) is increased, a flow of gas from the lower bag portion (28) to the rear bag portion (26) is restricted by a check valve (61). As a result, the internal pressure in the lower bag portion (28) is maintained high from the initial stage of restraint to the late stage of the restraint.

## Description

### TECHNICAL FIELD

The present invention relates to a vehicular side airbag device that restrains a seated occupant by a side airbag in the event of a side collision of a vehicle.

### BACKGROUND ART

In a vehicular side airbag device illustrated in FIG. 11 of Patent Literature 1 mentioned below, a side airbag includes a rear tube bag portion and a front tube bag portion. The rear tube bag portion and the front tube bag portion communicate with each other via a narrow communication portion. An inflator is provided in the rear tube bag portion, and the gas ejected from the inflator into the rear tube bag portion is supplied into the front tube bag portion through the communication portion. Thus, when the side airbag is inflated and deployed, the front portions of the chest, abdomen, and waist of a seated occupant are restrained by the front tube bag portion, and the rear portions of the shoulder, chest, abdomen, and waist of the seated occupant are restrained by the rear tube bag portion.

On the other hand, in a vehicular side airbag device illustrated in FIG. 14 of Patent Literature 1 mentioned below, a side airbag is partitioned into an upper chamber and a lower chamber by a partition wall. The upper chamber includes a rear tube bag portion and a front tube bag portion that communicate with each other via a narrow communication portion. The upper end portion of an inflator is positioned in the rear tube bag portion, and the lower end portion of the inflator is positioned in the lower chamber. The gas ejected from the inflator is supplied to the lower chamber and the rear tube bag portion and is supplied to the front tube bag portion through the communication portion. Thus, when the side airbag is inflated and deployed, the front portions of the chest and abdomen of a seated occupant are restrained by the front tube bag portion, the rear portions of the shoulder, chest and abdomen of the seated occupant are restrained by the rear tube bag portion, and the waist of the seated occupant is restrained by the lower chamber.

In addition, as related art literatures related to the present invention, for example, there are Patent Literatures 2 to 5 mentioned below.

### CITATION LIST

### PATENT LITERATURE

PATENT LITERATURE 1: Japanese Patent Application Publication No. 2010-132072
PATENT LITERATURE 2: Japanese Patent Application Publication No. 2008-201172
PATENT LITERATURE 3: Japanese Patent Application Publication No. 2011-240807
PATENT LITERATURE 4: Japanese Patent Application Publication No. 2010-184595
PATENT LITERATURE 5: WO 2010/131326

### SUMMARY OF INVENTION

### TECHNICAL PROBLEM

In the case of the configuration in which the rear tube bag portion extends downward so as to restrain the waist as in the vehicular side airbag device illustrated in FIG. 11 of Patent Literature 1 described above, if the internal pressure in the rear tube bag portion is set in accordance with the chest and abdomen having a relatively low load tolerance, there is a possibility that the waist having a relatively high load tolerance may not be sufficiently restrained.

On the other hand, in the case of the configuration in which the side airbag is partitioned into the two chambers, that is, the upper and lower chambers, by the partition wall as in the vehicular side airbag device illustrated in FIG. 14 of Patent Literature 1 described above, the gas escapes to the upper chamber from the lower chamber that receives a side load between the waist of the seated occupant and a vehicle side portion. This may cause a possibility that the waist may not be sufficiently restrained in the late stage of restraint.

In the light of the above-described circumstances, an object of the present invention is to provide a vehicular side airbag device capable of appropriately restraining body parts from the shoulder to the waist of a seated occupant by restraining forces corresponding to the load tolerances of the body parts.

### SOLUTION TO PROBLEM

A vehicular side airbag device according to a first aspect of the invention includes: an inflator provided in a side portion of a seatback of a vehicle seat, the side portion being an outer side portion in a vehicle-width direction, the inflator being actuated to generate gas upon detection or prediction of a side collision of a vehicle; and a side airbag provided in the side portion, the side airbag being partitioned into a front bag portion, a rear bag portion, and a lower bag portion, the side airbag being inflated and deployed when the gas generated by the inflator provided in the rear bag portion is distributed to each of the bag portions, the front bag portion restraining front portions of a chest and an abdomen of a seated occupant, the rear bag portion restraining a shoulder and rear portions of the chest and the abdomen of the seated occupant, and the lower bag portion restraining a waist of the seated occupant, and the side airbag being provided with a check valve that restricts, by an increase in an internal pressure in the lower bag portion, a flow of the gas from the lower bag portion to the rear bag portion.

According to the first aspect, the side airbag is partitioned into the front bag portion, the rear bag portion, and the lower bag portion. The inflator is provided in the rear bag portion. When a side collision of the vehicle is detected or predicted, the inflator is actuated. Then, the gas generated by the inflator is distributed to each of the bag portions, so that the side airbag is inflated and deployed. Thus, the front portions of the chest and the abdomen of the seated occupant are restrained by the front bag portion, and the shoulder and the rear portions of the chest and the abdomen of the seated occupant are restrained by the rear bag portion. In this case, the rear bag portion in which the inflator is provided is inflated and deployed earlier than the front bag portion such that the internal pressure in the rear bag portion is higher than that in the front bag portion. As a result, while the shoulder and the rear portions of the chest and the abdomen, which have a load tolerance higher than those of the front portions of the chest and the abdomen, are restrained by the rear bag portion early, the loads applied from the front bag portion to the front portions of the chest and the abdomen having a relatively low load tolerance are reduced.

Furthermore, in this aspect, the waist having a load tolerance higher than that of the shoulder, the chest, and the abdomen of the seated occupant is restrained by the lower bag portion of the side airbag. In addition, the check valve restricts, by the increase in the internal pressure in the lower bag portion, the flow of the gas from the lower bag portion to the rear bag portion (including a case where the flow of the gas is completely blocked). As a result, the internal pressure in the lower bag portion is maintained high from the initial stage of restraint to the late stage of the restraint. As described above, according to this aspect, body parts from the shoulder to the waist of the seated occupant are appropriately restrained by restraining forces corresponding to the load tolerances of the body parts.

In the vehicular side airbag device according to a second aspect of the invention based on the first aspect, a forward extension portion provided in an upper portion of the rear bag portion to restrain the shoulder of the seated occupant is separated from the front bag portion by an upper partition portion extending in an obliquely upward and forward direction of the seatback in the inflated and deployed state.

According to the second aspect, the forward extension portion provided in the upper portion of the rear bag portion is separated from the front bag portion by the upper partition portion extending in the obliquely upward and forward direction of the seatback in the inflated and deployed state of the side airbag. That is, the upper partition portion extending forward and upward with respect to the front-rear direction of the seatback is set, and thus the upper portion of the rear bag portion extends to the upper side of the front bag portion and restrains the shoulder of the seated occupant. Since the upper partition portion is set as described above, the upper portion, that is, the forward extension portion of the rear bag portion is caused to appropriately face the shoulder of the seated occupant while an increase in the capacity of the rear bag portion is curbed.

In addition, at the time of the inflation and deployment of the side airbag, inflation in the vicinity of the upper partition portion is restricted, and thus the inner surface of the front bag portion in the vehicle-width direction is curved such that the upper side thereof with respect to the center portion in the up-down direction extends upward as the upper side extends in a direction toward the outside in the vehicle-width direction (the upper side extends outward in the vehicle-width direction as the upper side extends in a direction toward the upper side). Thus, the side airbag and the seated occupant relatively approach each other due to an impact of a side collision, and thus the curved surface and the upper arm of the seated occupant come into sliding contact with each other, so that a force that pushes the upper arm upward is generated. As a result, the upper arm is pushed toward the upper side of the front bag portion, and is restrained by the forward extension portion. Thus, the upper arm is inhibited from being sandwiched between the chest of the seated occupant and the side airbag, and thus the load on the chest is reduced.

In the vehicular side airbag device according to a third aspect of the invention based on the first or second aspect, the side airbag has a vent hole through which the gas in the front bag portion is discharged to an outside, and the vent hole is positioned above an upper surface of an armrest portion provided in a door trim of a side door of the vehicle in the inflated and deployed state.

According to the third aspect, since the gas supplied to the front bag portion is discharged from the vent hole to the outside of the side airbag, the internal pressure in the front bag portion is reduced at the late stage of restraint. Thus, the front portions of the chest and the abdomen having a relatively low load tolerance are softly restrained by the front bag portion in which the internal pressure is reduced, and deflation of the front bag portion is inhibited from being insufficient, so that a sufficient impact absorption stroke is ensured. Moreover, in the inflated and deployed state of the side airbag, the vent hole is positioned above the upper surface of the armrest portion provided in the door trim of the side door of the vehicle. Thus, the vent hole is prevented from being sandwiched between the armrest portion and the seated occupant and being inadvertently blocked.

In the vehicular side airbag device according to a fourth aspect of the invention based on the third aspect, a communication hole that provides communication between the front bag portion and the rear bag portion is provided in a partition portion that separates the front bag portion and the rear bag portion from each other, and the communication hole and the vent hole are offset from each other in an up-down direction in the inflated and deployed state.

According to the fourth aspect, the gas generated by the inflator provided in the rear bag portion of the side airbag is supplied (distributed) to the front bag portion via the communication hole formed in the upper partition portion that separates the front bag portion and the rear bag portion from each other. The gas supplied to the front bag portion is discharged from the vent hole to the outside of the side airbag. The vent hole and the communication hole are offset (deviated) from each other in the up-down direction in the inflated and deployed state of the side airbag, and thus the gas supplied into the front bag portion via the communication hole is not directly (linearly) discharged from the vent hole to the outside. Thus, the deployment performance of the front bag portion at the initial stage of restraint is sufficiently ensured.

In the vehicular side airbag device according to a fifth aspect of the invention based on any one of the first to fourth aspects, a flow-adjusting fabric sheet that distributes the gas generated by the inflator to an upper portion in the rear bag portion and an inside of the lower bag portion is provided in the rear bag, and a lower end portion of the flow-adjusting fabric sheet functions as the check valve, the lower end portion protruding into the lower bag portion.

According to the fifth aspect, the flow-adjusting fabric sheet provided in the rear bag portion of the side airbag distributes the gas generated by the inflator to the upper portion of the rear bag portion and the inside of the lower bag portion. Thus, the upper portion of the rear bag portion and the lower bag portion are inflated and deployed early and thus the upper portion of the rear bag portion and the lower bag portion are interposed early in a narrow space between the shoulder and the waist of the seated occupant and the vehicle side portion. In addition, since the lower end portion of the flow-adjusting fabric sheet, which protrudes into the lower bag portion, functions as the check valve, the check valve has a simple configuration.

In the vehicular side airbag device according to a sixth aspect of the invention based on the second aspect, an inclination angle of the upper partition portion with respect to a front-rear direction of the seatback is set to be within a range of 30 degrees to 60 degrees.

In the vehicular side airbag device according to a seventh aspect of the invention based on any one of the first to sixth aspects, the lower bag portion in the inflated and deployed state is greater in length in a front-rear direction of the vehicle than the waist of the seated occupant.

### ADVANTAGEOUS EFFECTS OF INVENTION

As described above, with the vehicular side airbag device according to the present invention, body parts from the shoulder to the waist of a seated occupant are appropriately restrained by restraining forces corresponding to the load tolerances of the body parts.

### BRIEF DESCRIPTION OF DRAWINGS

[FIG. 1] FIG. 1 is a side view illustrating an inflated and deployed state of a side airbag of a vehicular side airbag device according to a first embodiment of the present invention.
[FIG. 2] FIG. 2 is an enlarged side view illustrating the side airbag.
[FIG. 3] FIG. 3 is an enlarged sectional view illustrating a section taken along the line F3-F3 in FIG. 2.
[FIG. 4] FIG. 4 is an enlarged sectional view illustrating a section taken along the line F4-F4 in FIG. 2.
[FIG. 5] FIG. 5 is an enlarged sectional view illustrating a section taken along the line F5-F5 in FIG. 2.
[FIG. 6] FIG. 6 is a side view illustrating an inflated and deployed state of a side airbag of a vehicular side airbag device according to a second embodiment of the present invention.
[FIG. 7] FIG. 7 is a side view illustrating an inflated and deployed state of a side airbag of a vehicular side airbag device according to a third embodiment of the present invention.

### DESCRIPTION OF EMBODIMENTS

### <First Embodiment>

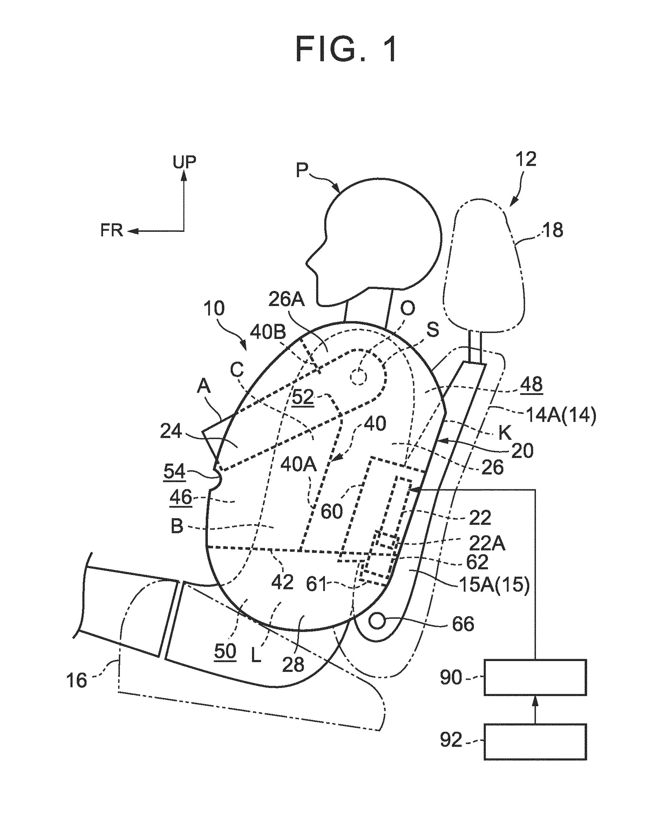

A vehicular side airbag device 10 according to a first embodiment of the present invention will be described with reference to FIG. 1 to FIG. 5. Note that, an arrow FR, an arrow UP and an arrow OUT, which are shown as appropriate in the drawings, respectively indicate a forward direction (traveling direction) of a vehicle, an upward direction of the vehicle, and an outward direction in a vehicle-width direction of the vehicle. Hereinafter, in a case where description is provided using forward and rearward directions and upward and downward directions, unless otherwise stated, the forward and rearward directions indicate forward and rearward directions in a vehicle front-rear direction, and the upward and downward directions indicate upward and downward directions in a vehicle up-down direction.

### (Configuration)

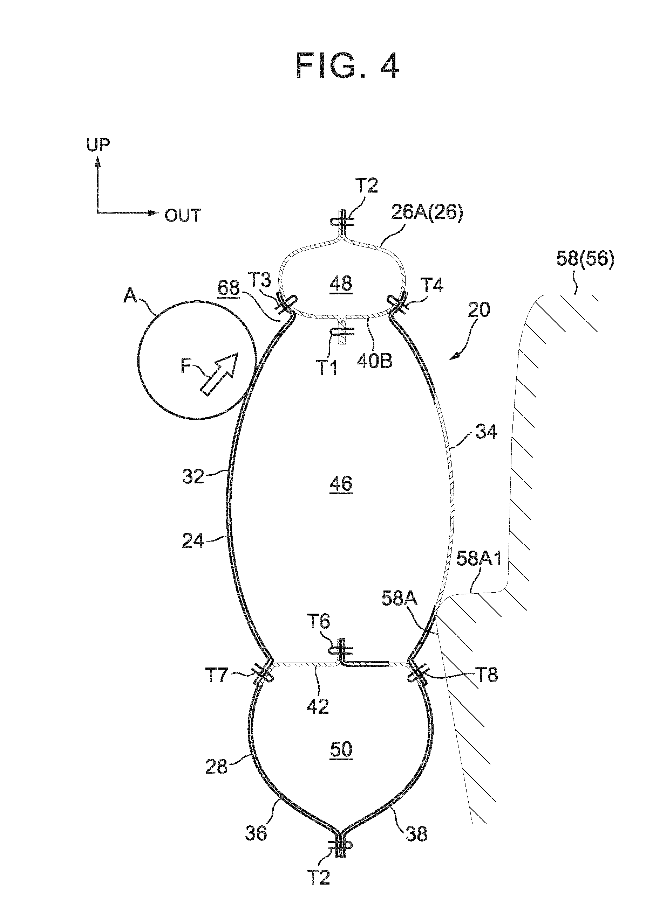

As illustrated in FIG. 1, the side airbag device 10 according to the first embodiment is mounted in a door-side side portion 14A (an outer side portion in a vehicle-width direction: a side portion on a side door 56 side illustrated in FIG. 4) of a seatback 14 of a vehicle seat 12. The seatback 14 is tiltably connected to the rear end portion of a seat cushion 16, and a headrest 18 is connected to the upper end portion of the seatback 14.

In the present embodiment, a front-rear direction, a right-left direction (width direction), and an up-down direction of the vehicle seat 12 respectively coincide with a front-rear direction, a right-left direction (width direction) and an up-down direction of the vehicle. In FIG. 1, instead of a real occupant, a crash test dummy P is seated in the vehicle seat 12. The dummy P is, for example, AM50 (a model that covers 50% of American adult males) of WorldSID (World Side Impact Dummy). Hereinafter, for easily understanding of the description, the dummy P will be referred to as "seated occupant P".

The side airbag device 10 includes a side airbag 20, and an inflator (gas generator) 22 that generates gas in the side airbag 20, as main components. The side airbag 20 is disposed (accommodated) in the door-side side portion 14A in a state of being folded and combined with the inflator 22 and the like into one unit (module). The side airbag 20 is inflated and deployed between the seated occupant P and the side door 56 (see FIG. 4) by the pressure of the gas generated by the inflator 22 (the state illustrated in FIG. 1). A seatback pad and a seat upholstery (both are not illustrated) that are disposed in the door-side side portion 14A are configured to tear under the inflation pressure of the side airbag 20 at the time of the inflation and deployment. Note that, the forward, rearward, upward, and downward directions of the side airbag 20 in the following description indicate the directions in a state where the side airbag 20 is inflated and deployed unless otherwise stated, and substantially coincide with the forward, rearward, upward and downward directions of the seatback 14.

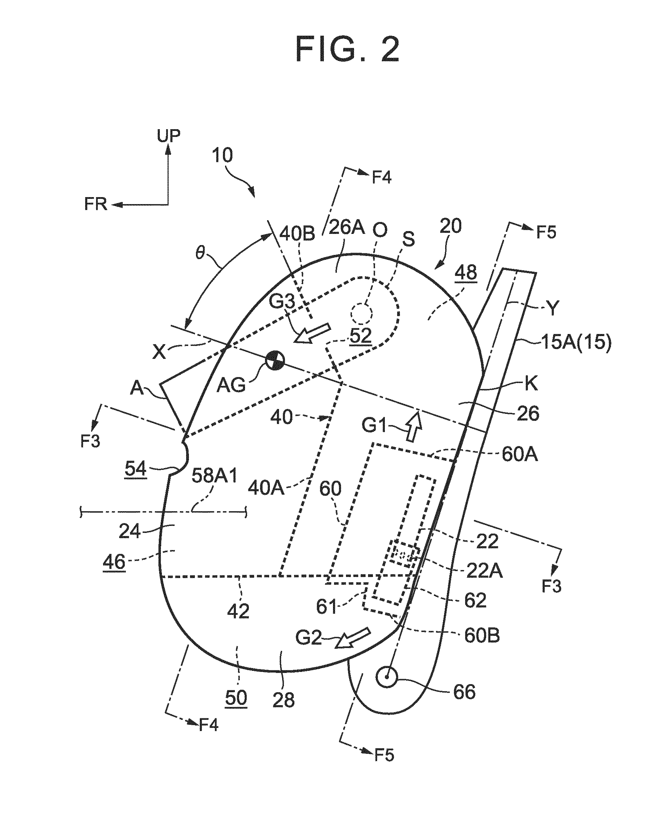

As illustrated in FIG. 1 to FIG. 5, the side airbag 20 is a so-called three chamber side airbag, and is formed by integrating a rear bag portion 26, a front bag portion 24, and a lower bag portion 28 together by sewing. The rear bag portion 26 is formed by sewing one base fabric sheet 30 formed by cutting, for example, a nylon-based or polyester-based fabric material. The base fabric sheet 30 is folded in two along a folding line K. The front end edge portions of one side portion 30A and the other side portion 30B, which are on opposite sides of the folding line K, are sewn together at a sewn portion T1, and the upper end edge portions thereof are sewn together at an outer peripheral sewn portion T2 set on the outer peripheral portion of the side airbag 20. Note that, in FIG. 1 and FIG. 2, illustration of the above-described sewn portions T1, T2 and sewn portions T3, T4, T6 to T11, which will be described later, is omitted.

The front bag portion 24 is formed by sewing together two base fabric sheets 32, 34, which are made of the same fabric material as that of the base fabric sheet 30. The front end edge portions of the base fabric sheets 32, 34 are sewn together at the outer peripheral sewn portion T2, and the front end portion of the rear bag portion 26 is interposed between the rear end edge portions of the base fabric sheets 32, 34. The rear end edge portions of the base fabric sheets 32, 34 are sewn to the front end portion of the rear bag portion 26 at the sewn portions T3, T4.

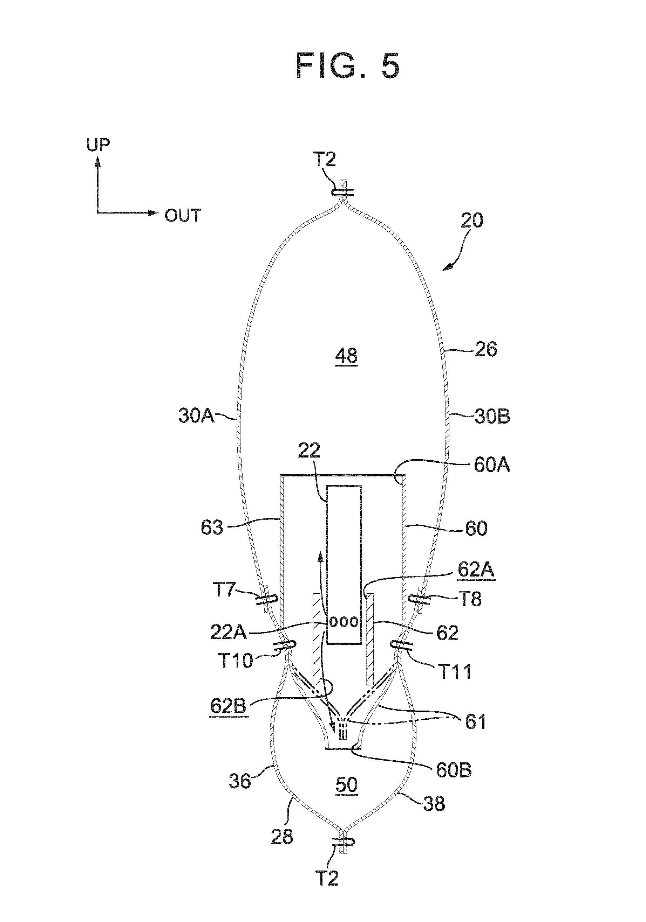

The lower bag portion 28 is formed by sewing together two base fabric sheets 36, 38, which are made of the same fabric material as that of the base fabric sheet 30. The upper end edge portions of the base fabric sheets 36, 38 are sewn together at the sewn portion T6 (see FIG. 4), and the lower end edge portions thereof are sewn together at the outer peripheral sewn portion T2. In addition, as illustrated in FIG. 4, the front portion side in the upper end portion of the lower bag portion 28 is interposed between the lower end edge portions of the base fabric sheets 32, 34 of the front bag portion 24, and is sewn to the base fabric sheets 32, 34 at the sewn portions T7, T8. Furthermore, the rear portion side in the upper end portion of the lower bag portion 28 is interposed between the one side portion 30A and the other side portion 30B of the base fabric sheet 30 that forms the rear bag portion 26, and is sewn to the one side portion 30A and the other side portion 30B at the sewn portions T7, T8 as illustrated in FIG. 5.

The side airbag 20 is formed to have a generally elliptical shape that is elongated along the up-down direction of the seatback 14 when the inflated and deployed state thereof is seen in a side view as illustrated in FIG. 1 and FIG. 2, and is set to have such dimensions that a shoulder S, chest C, abdomen B, and waist L of the seated occupant P are restrained by the side airbag 20. In the inflated and deployed state, the front bag portion 24 and the rear bag portion 26 are located next to each other in the front-rear direction of the vehicle, and the lower bag portion 28 is located below the front bag portion 24 and the rear bag portion 26.

The front bag portion 24 and the rear bag portion 26 are separated from each other by a partition portion 40 (tether portion) formed of a portion of the base fabric sheet 30 (the front end portion of the rear bag portion 26), which is disposed in the side airbag 20. The partition portion 40 includes a vertical partition portion 40A that extends along the up-down direction of the seatback 14, and an upper partition portion 40B (inclined partition portion) that extends from the upper end of the vertical partition portion 40A in an obliquely upward and forward direction of the seatback 14.

In addition, the front bag portion 24 and the rear bag portion 26 are separated from the lower bag portion 28 by a lower partition portion 42 (tether portion) formed of portions of the base fabric sheets 36, 38 (the upper end portion of the lower bag portion 28), which are disposed in the side airbag 20. The inside of the front bag portion 24 serves a front chamber 46, the inside of the rear bag portion 26 serves as a rear chamber 48, and the inside of the lower bag portion 28 serves as a lower chamber 50.

A method of manufacturing the side airbag 20 is not limited to the method described above, and various modifications may be made as needed. A side airbag may be manufactured, for example, as follows. A bag body is formed by folding one base fabric sheet in two and sewing the outer peripheral edge portions thereof together, and the bag body is partitioned into a front bag portion, a rear bag portion, and a lower bag portion by sewn portions (seams) corresponding to the upper partition portion, the vertical partition portion, and the lower partition portion. Alternatively, for example, the vertical partition portion and the lower partition portion may be formed of tethers and the upper partition portion may be formed of a seam (sewn portion). That is, the configurations of partitions may be changed as needed.

As illustrated in FIG. 1 and FIG. 2, the front chamber 46 and the rear chamber 48 communicate with each other via a communication hole 52 formed in the upper partition portion 40B. In addition, a vent hole 54 is formed in the front end edge portion of the front bag portion 24, and the front chamber 46 and the outside of the side airbag 20 communicate with each other via the vent hole 54. The vent hole 54 is provided to be positioned above an upper surface 58A1 of an armrest portion 58A provided in a door trim 58 of the side door 56 (see FIG. 4) in the inflated and deployed state of the side airbag 20. In FIG. 2, the upper surface 58A1 of the armrest portion 58A is indicated by a two-dot chain line.

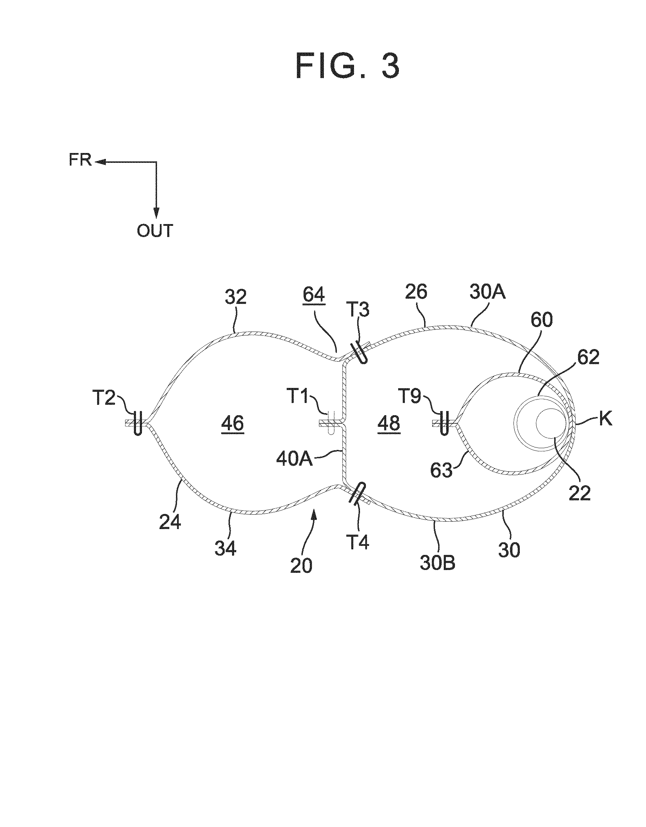

In addition, a flow-adjusting fabric sheet 60 is provided in the rear chamber 48. The flow-adjusting fabric sheet 60 is formed in a tubular shape by sewing a base fabric sheet 63 (see FIG. 3 and FIG. 5), which is made of the same fabric material as that of the base fabric sheet 30 and the like, at the sewn portion T9 (see FIG. 3). The flow-adjusting fabric sheet 60 is disposed in the lower portion of the rear chamber 48 in a state where the axial direction thereof extends along the up-down direction of the seatback 14. The above-described sewn portion T6 (see FIG. 4) is not set on the lower end side of the flow-adjusting fabric sheet 60, and the lower end side of the flow-adjusting fabric sheet 60 is inserted into the lower chamber 50 from between the base fabric sheets 36, 38 and is sewn to the base fabric sheets 36, 38 at the sewn portions T10, T11. A portion (lower end portion) of the flow-adjusting fabric sheet 60, which is positioned below the sewn portions T10, T11, constitutes a check valve 61.

Furthermore, the inflator 22 is accommodated in the rear chamber 48. The inflator 22 is a so-called cylinder-type inflator, and is formed in a columnar shape. The inflator 22 is disposed in the rear chamber 48 in a state where the axial direction thereof extends along the up-down direction of the seatback 14, and is accommodated inside the flow-adjusting fabric sheet 60.

A pair of upper and lower stud bolts (not illustrated) protrudes from the outer peripheral portion of the inflator 22 toward the vehicle rear side. The stud bolts pass through the base fabric sheets 63, 30 and pass through a bracket (not illustrated) having an L-shaped plane section and fixed to a side frame 15A of a seatback frame 15, and nuts (not illustrated) are screwed onto the distal end sides thereof. Thus, the inflator 22 is fixedly fastened to the side frame 15A along with the side airbag 20 (so-called back surface fastening). Note that, a configuration in which a stud bolt that protrudes from the outer peripheral portion of the inflator 22 inward in the vehicle-width direction passes through the base fabric sheets 63, 30 and the side frame 15A and is screwed into a nut may also be employed (so-called side surface fastening).

A gas ejecting portion 22A is provided at the lower end portion of the inflator 22. A plurality of gas ejecting ports arranged along the circumferential direction of the inflator 22 is formed in the gas ejecting portion 22A. When the inflator 22 is actuated, the gas is radially ejected from the plurality of gas ejecting ports.

As illustrated in FIG. 1, a side collision ECU 90 mounted in the vehicle is electrically connected to the inflator 22. A side collision sensor 92 that detects a side collision is electrically connected to the side collision ECU 90. The side collision ECU 90 is configured to actuate the inflator 22 when a side collision (the fact that a side collision is unavoidable) is detected on the basis of a signal from the side collision sensor 92. In a case where a pre-crash sensor that predicts (makes a prediction of) a side collision is electrically connected to the side collision ECU 90, the side collision ECU 90 may be configured to actuate the inflator 22 when the side collision is predicted on the basis of a signal from the pre-crash sensor.

The lower end portion of the inflator 22 is inserted into a deflector 62 formed in a cylindrical shape. The deflector 62 is fixed to the inflator 22 by means of, for example, swaging, and covers the gas ejecting portion 22A of the inflator 22.

In the side airbag device 10 having the above configuration, when the inflator 22 is actuated, the gas ejected from the gas ejecting portion 22A of the inflator 22 is ejected upward and downward from an upper end opening 62A and a lower end opening 62B of the deflector 62. The amounts of gas distributed upward and downward at this time are adjusted by changing the position at which the deflector 62 is fixed to the inflator 22 in the up-down direction.

The gas ejected from the upper end opening 62A of the deflector 62 is ejected (distributed) from an upper end opening 60A of the flow-adjusting fabric sheet 60 toward the upper portion of the rear chamber 48 (see an arrow G1 in FIG. 2). In addition, the gas ejected from the lower end opening 62B of the deflector 62 is ejected (distributed) from a lower end opening 60B of the flow-adjusting fabric sheet 60 toward the lower chamber 50 (see an arrow G2 in FIG. 2). Furthermore, the gas ejected toward the upper portion of the rear chamber 48 is distributed to the upper portion of the front chamber 46 through the communication hole 52 (see an arrow G3 in FIG. 2).

Thus, the front bag portion 24, the rear bag portion 26, and the lower bag portion 28 (that is, the side airbag 20) are inflated and deployed between the seated occupant P and the door trim 58 (vehicle side portion) of the side door 56. In addition, the front portions (front half portions: front sides) of the chest C and the abdomen B of the seated occupant P are restrained by the front bag portion 24, the shoulder S and the rear portions (rear half portions: rear sides) of the chest C and the abdomen B of the seated occupant P are restrained by the rear bag portion 26, and the waist L of the seated occupant P is restrained by the lower bag portion 28. Hereinafter, the inflated and deployed state of the side airbag 20 will be described in detail.

The vertical partition portion 40A is provided to extend in the up-down direction of the seatback along the center portions of the chest C and the abdomen B of the seated occupant P in the front-rear direction. In the vicinity of the vertical partition portion 40A, as illustrated in FIG. 3, the inner surface of the side airbag 20 in the vehicle-width direction is recessed outward in the vehicle-width direction, whereby a recessed portion 64 is formed. The recessed portion 64 extends in the up-down direction of the seatback along the vertical partition portion 40A. The recessed portion 64 is set to face the center portions of the chest C and the abdomen B in the front-rear direction (that is, the outermost portions in the vehicle-width direction).

On the other hand, the upper partition portion 40B is provided to extend from the upper end of the vertical partition portion 40A in the obliquely upward and forward direction of the seatback 14. That is, the upper partition portion 40B is inclined upward in the forward direction of the seatback 14, with respect to the front-rear direction of the seatback 14, that is, a direction (a direction along a one-dot chain line X in FIG. 2) perpendicular to the up-down direction (a direction along a one-dot chain line Y in FIG. 2) of the seatback 14 in a seat side view. The up-down direction of the seatback 14 is a direction that connects the center of the upper end portion of the seatback frame 15 in the front-rear direction to the central axis of a reclining rod 66 in a seat side view. In addition, an inclination angle θ of the upper partition portion 40B with respect to the front-rear direction of the seatback 14 is preferably within a range of 30 degrees to 60 degrees, and more preferably within a range of 40 degrees to 50 degrees.

When the inflated and deployed state of the side airbag 20 is viewed from the vehicle-width direction, the upper partition portion 40B is set to be positioned near midway between the center O of the shoulder S of the seated occupant P and the center portion of an upper arm A in the longitudinal direction thereof (the position of the center of gravity AG of the upper arm A or a position near the center of gravity AG). By setting the upper partition portion 40B, a forward extension portion 26A that is separated from the front bag portion 24 is formed in the upper portion of the rear bag portion 26. The forward extension portion 26A is inflated and deployed toward the upper side of the front bag portion 24 and restrains the shoulder S of the seated occupant P.

In addition, in the vicinity of the upper partition portion 40B, as illustrated in FIG. 4, the inner surface of the side airbag 20 in the vehicle-width direction is recessed outward in the vehicle-width direction, whereby a recessed portion 68 is formed. The recessed portion 68 extends in the obliquely upward and forward direction of the seatback 14 along the upper partition portion 40B. In addition, the inner surface of the front bag portion 24 in the vehicle-width direction is curved such that the upper side thereof with respect to the center portion in the up-down direction extends upward as the upper side extends in a direction toward the outside in the vehicle-width direction (the upper side extends outward in the vehicle-width direction as the upper side extends in a direction toward the upper side).

On the other hand, the lower partition portion 42 is provided to extend in the front-rear direction of the vehicle at a height between the abdomen B and the waist L of the seated occupant P. The lower bag portion 28 that is separated from the front bag portion 24 and the rear bag portion 26 by the lower partition portion 42 is set to be greater in length in the front-rear direction of the vehicle than the waist L of the seated occupant P, and thus restrains the waist L in a wide range in the front-rear direction of the vehicle. The lower partition portion 42 is set to extend in an obliquely downward and forward direction with respect to the front-rear direction of the seatback 14. That is, the lower partition portion 42 is inclined downward in the forward direction of the seatback 14, with respect to the direction (the direction along the one-dot chain line X in FIG. 2) perpendicular to the up-down direction of the seatback 14 (the direction along the one-dot chain line Y in FIG. 2) in a seat side view. In the inflated and deployed state, the dimension (volume) of the front portion side of the lower bag portion 28 in the up-down direction is smaller than that of the rear portion side thereof.

In the present embodiment, the gas ejected from the upper end opening 60A of the flow-adjusting fabric sheet 60 toward the upper portion of the rear bag portion 26 is supplied to the front bag portion 24 through the communication hole 52 of the upper partition portion 40B. Then, the gas supplied to the front bag portion 24 is discharged from the vent hole 54 to the outside of the side airbag 20. Thus, an internal pressure P1 in the front bag portion 24 is lower than an internal pressure P2 in the rear bag portion 26 (P1 < P2).

Furthermore, in the present embodiment, when the gas is ejected from the lower end opening 60B of the flow-adjusting fabric sheet 60 into the lower bag portion 28 and thus the internal pressure in the lower bag portion 28 becomes equal to or higher than a predetermined value, the check valve 61 formed of the lower end portion of the flow-adjusting fabric sheet 60 is closed (crushed) under the internal pressure in the lower bag portion 28 (see a two-dot chain line in FIG. 5). Thus, the flow of the gas from the inside of the lower bag portion 28 to the inside of the rear bag portion 26 is restricted. As a result, from the initial stage of restraint to the late stage of the restraint of the seated occupant P, an internal pressure P3 in the lower bag portion 28 is kept higher than the internal pressure P2 in the rear bag portion 26 (P2 < P3).

### (Operations and Effects)

Next, the operations and effects of the first embodiment will be described.

In the side airbag device 10 having the above configuration, when the side collision ECU 90 detects a side collision on the basis of a signal from the side collision sensor 92, the inflator 22 is actuated by the side collision ECU 90. Then, the gas ejected from the inflator 22 is distributed to the front bag portion 24, the rear bag portion 26, and the lower bag portion 28 of the side airbag 20, and thus the side airbag 20 is inflated and deployed. Thus, the front portions of the chest C and the abdomen B of the seated occupant P are restrained by the front bag portion 24, and the shoulder S and the rear portions of the chest C and the abdomen B of the seated occupant P are restrained by the rear bag portion 26. In this case, the rear bag portion 26 in which the inflator 22 is provided is inflated and deployed earlier than the front bag portion 24 such that the internal pressure in the rear bag portion 26 is higher than that in the front bag portion 24. As a result, while the shoulder S and the rear portions of the chest C and the abdomen B which have a load tolerance higher than that of the front portions of the chest C and the abdomen B are restrained by the rear bag portion 26 early, the loads applied from the front bag portion 24 to the front portions of the chest C and the abdomen B which have a relatively low load tolerance are reduced.

Furthermore, in the present embodiment, the waist L having a load tolerance higher than that of the shoulder S, the chest C, and the abdomen B of the seated occupant P is restrained by the lower bag portion 28 of the side airbag 20. In addition, the check valve 61 restricts the flow of the gas from the lower bag portion 28 to the rear bag portion 26. The flow of the gas from the lower bag portion 28 to the rear bag portion 26 is restricted due to an increase in the internal pressure in the lower bag portion 28. As a result, the internal pressure in the lower bag portion 28 is maintained at a high level from the initial stage of restraint to the late stage of the restraint. As described above, according to the present embodiment, body parts from the shoulder S to the waist L of the seated occupant P are appropriately restrained by restraining forces corresponding to the load tolerances of the body parts.

In addition, in the present embodiment, the forward extension portion 26A that restrains the shoulder S of the seated occupant P is provided at the upper portion of the rear bag portion 26. Since the forward extension portion 26A is inflated and deployed early, the shoulder S of the seated occupant P is restrained early. Moreover, the forward extension portion 26A is separated from the front bag portion 24 by the upper partition portion 40B that extends from the upper end of the vertical partition portion 40A in the obliquely upward and forward direction of the seatback 14, and is inflated and deployed toward the upper side of the front bag portion 24. That is, the upper partition portion 40B that extends forward and upward with respect to the front-rear direction of the seatback 14 is set, and thus the upper portion (the forward extension portion 26A) of the rear bag portion 26 extends toward the upper side of the front bag portion 24 and restrains the shoulder S of the seated occupant P. Since the upper partition portion 40B is set as described above, the upper portion (the forward extension portion 26A) of the rear bag portion 26 is caused to appropriately face the shoulder S of the seated occupant P while an increase in the capacity of the rear bag portion 26 is curbed. As a result, the rear portions of the chest C and the abdomen B and the shoulder S are restrained early, and thus the performance of restraining the seated occupant P in an early stage by the side airbag 20 is improved.

Furthermore, as illustrated in FIG. 4, the inner surface of the inflated and deployed front bag portion 24 in the vehicle-width direction is curved such that the upper side thereof with respect to the center portion in the up-down direction extends upward as the upper side extends in a direction toward the outside in the vehicle-width direction. Therefore, the side airbag 20 and the seated occupant P approach each other due to an impact of a side collision, and thus the curved surface and the upper arm A of the seated occupant P come into sliding contact with each other, so that a force F that pushes the upper arm A upward is generated. As a result, the upper arm A is pushed toward the upper side of the front bag portion 24 and is restrained by the forward extension portion 26A. Thus, the upper arm A is inhibited from being interposed between the chest C of the seated occupant P and the side airbag 20, and thus load on the chest C is reduced.

In addition, in the present embodiment, since the gas supplied to the front bag portion 24 is discharged from the vent hole 54 to the outside of the side airbag 20, the internal pressure in the front bag portion 24 is reduced at the late stage of restraint. Thus, the front portions of the chest C and the abdomen B having a relatively low load tolerance are softly restrained by the front bag portion 24 in which the internal pressure is reduced, and deflation of the front bag portion 24 is inhibited from being insufficient, so that a sufficient impact absorption stroke is ensured. Moreover, in the inflated and deployed state of the side airbag 20, the vent hole 54 is positioned above the upper surface 58A1 of the armrest portion 58A provided in the door trim 58 of the side door 56 of the vehicle. Thus, the vent hole 54 is prevented from being sandwiched between the armrest portion 58A and the seated occupant P and being inadvertently blocked.

In addition, in the present embodiment, the gas generated by the inflator 22 provided in the rear bag portion 26 of the side airbag 20 is supplied to the front bag portion 24 via the communication hole 52 formed in the upper partition portion 40B that separates the front bag portion 24 and the rear bag portion 26 from each other. The gas supplied to the front bag portion 24 is discharged from the vent hole 54 to the outside of the side airbag 20. The vent hole 54 and the communication hole 52 are offset from each other in the up-down direction in the inflated and deployed state of the side airbag 20, and thus the gas supplied into the front bag portion 24 via the communication hole 52 is not directly (linearly) discharged from the vent hole 54 to the outside. Thus, the deployment performance of the front bag portion 24 at the initial stage of restraint is sufficiently ensured.

Furthermore, in the present embodiment, the flow-adjusting fabric sheet 60 provided in the rear bag portion 26 of the side airbag 20 distributes the gas generated by the inflator 22 to the upper portion of the rear bag portion 26 and the inside of the lower bag portion 28. Thus, the upper portion of the rear bag portion 26 and the lower bag portion 28 are inflated and deployed early and thus the upper portion of the rear bag portion 26 and the lower bag portion 28 are interposed early in a narrow space between the shoulder S and the waist L of the seated occupant P and the vehicle side portion. In addition, since the lower end portion of the flow-adjusting fabric sheet, which protrudes into the lower bag portion 28, functions as the check valve 61, the check valve 61 has a simple configuration.

In addition, in the present embodiment, when the inflated and deployed state of the side airbag 20 is viewed from the vehicle-width direction, the upper partition portion 40B is positioned near midway between the center O of the shoulder S of the seated occupant P and the center portion of the upper arm A in the longitudinal direction thereof (a position near the center of gravity AG). Thus, as compared to the case where the upper partition portion 40B is set near the center of gravity AG of the upper arm A, the force F of the front bag portion 24 for pushing the upper arm A upward is more reliably applied to a portion near the center of gravity AG of the upper arm A. Thus, the upper arm A is effectively pushed upward.

In the present embodiment, when the inflated and deployed state of the side airbag 20 is viewed from the vehicle-width direction, the vertical partition portion 40A is set to extend in the up-down direction of the seatback along the center portions of the chest C and the abdomen B of the seated occupant P in the front-rear direction. Thus, the side surfaces of the chest C and the abdomen B of the seated occupant P are restrained by the front bag portion 24 and the rear bag portion 26 so as to be covered along the curves thereof from the front side and the rear side. Thus, the positional relationship between the chest C and the abdomen B, and the side airbag 20 in the front-rear direction of the vehicle is stabilized.

Furthermore, in the present embodiment, when the side airbag 20 is inflated and deployed, the inner surface of the side airbag 20 in the vehicle-width direction is recessed outward in the vehicle-width direction, in the vicinity of the vertical partition portion 40A and the upper partition portion 40B. The center portion (that is, the outermost portion in the vehicle-width direction) of the side surface of the chest C in the front-rear direction is fitted into the recessed portion 64 formed in the vicinity of the vertical partition portion 40A. Thus, the load on the chest C (ribs and the like) is reduced. In addition, the upper arm A pushed upward by coming into sliding contact with the front bag portion 24 is fitted into the recessed portion 68 formed in the vicinity of the upper partition portion 40B. Thus, the upper arm A is reliably restrained at the position to which the upper arm A has been pushed upward.

In the present embodiment, the front bag portion 24 and the rear bag portion 26 are separated from each other by the partition portion 40 (tether portion) formed of a portion of the base fabric sheet 30, and the front bag portion 24 and the rear bag portion 26 are separated from the lower bag portion 28 by the lower partition portion 42 (tether portion) formed of portions of the base fabric sheets 36, 38. Thus, the inflation thicknesses (dimensions in the vehicle-width direction in the inflated and deployed state) of the front bag portion 24, the rear bag portion 26, and the lower bag portion 28 are respectively increased by the width of the tether portion. Thus, the appropriate impact absorption strokes of the front bag portion 24, the rear bag portion 26, and the lower bag portion 28 are ensured.

Furthermore, in the present embodiment, in the inflated and deployed state of the side airbag 20, the lower partition portion 42 extends in the obliquely downward and forward direction with respect to the front-rear direction of the seatback 14, and thus the volume of the front portion side of the lower bag portion 28 is smaller than that of the rear portion side. Thus, for example, even in a case where the side airbag 20 is inflated and deployed in a state where the seated occupant P is positioned at an irregular position forward of the door-side side portion 14A, since the volume of the front portion side of the lower bag portion 28, of which the internal pressure becomes highest, is small, the influence on the seated occupant P is small.

Next, other embodiments of the present invention will be described. Note that configurations and operations that are basically the same as those in the first embodiment are denoted by the same reference numerals as those in the first embodiment, and the description thereof will be omitted.

### <Second Embodiment>

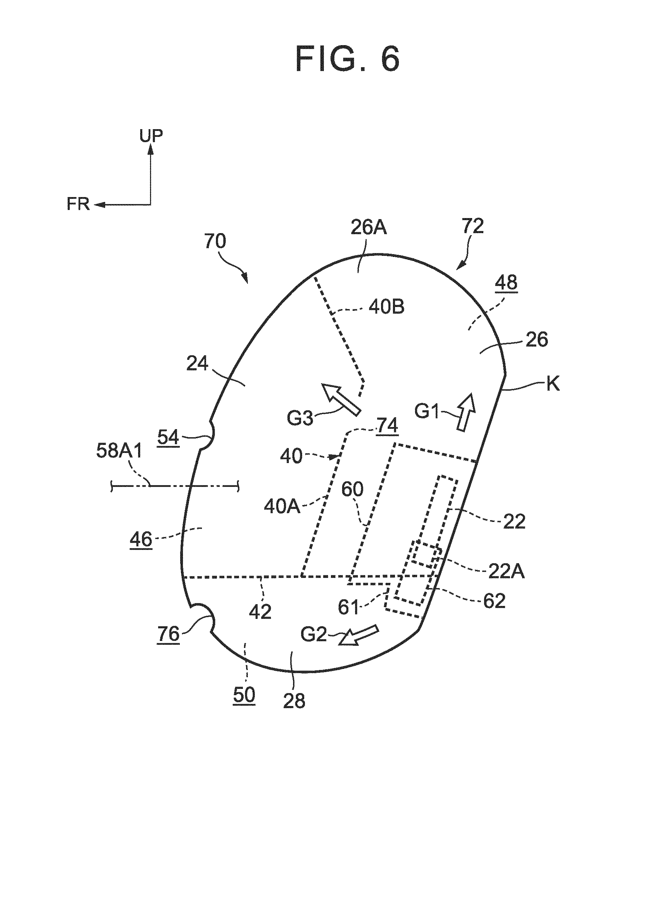

FIG. 6 illustrates a side view of an inflated and deployed state of a side airbag 72 of a vehicular side airbag device 70 according to a second embodiment of the present invention. In the side airbag 72, a communication hole 74 is formed in the upper end portion of the vertical partition portion 40A, instead of the communication hole 52 according to the first embodiment. The front chamber 46 and the rear chamber 48 communicate with each other via the communication hole 74. The communication hole 74 is provided to be offset upward from the vent hole 54 in the inflated and deployed state of the side airbag 72. In addition, in the side airbag 72, a vent hole 76 is formed in the front end portion of the lower bag portion 28, so that the lower chamber 50 communicates with the outside of the side airbag 72 via the vent hole 76. The other configurations are the same as those in the first embodiment.

In the present embodiment, gas supplied to the rear chamber 48 is supplied to the upper portion of the front chamber 46 via the communication hole 74 formed in the upper end portion of the vertical partition portion 40A. Thus, the inflation and deployment of the upper portion of the front bag portion 24 is promoted, and an effect of pushing the upper arm A upward by the front bag portion 24 is enhanced.

In addition, the communication hole 74 and the vent hole 54 are offset from each other in the up-down direction in the inflated and deployed state of the side airbag 72. Therefore, as in the first embodiment, the gas supplied to the front chamber 46 via the communication hole 74 is not directly (linearly) discharged from the vent hole 54 to the outside.

Furthermore, the gas supplied to the lower chamber 50 is discharged from the vent hole 76 formed in the front end portion of the lower bag portion 28 to the outside of the side airbag 72. Thus, deflation of the lower bag portion 28 is inhibited from being insufficient, so that a sufficient impact absorption stroke is ensured.

### <Third Embodiment>

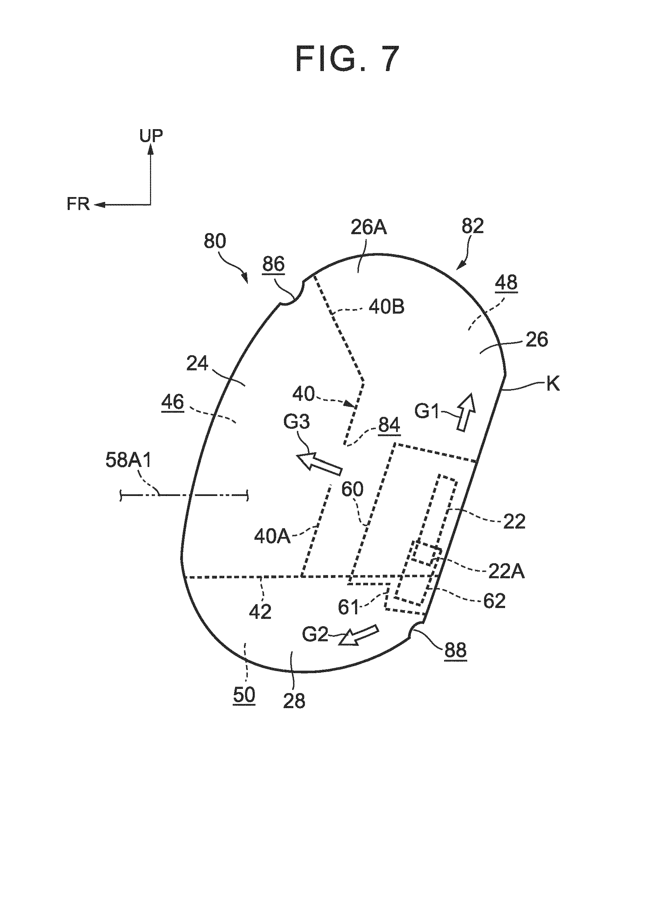

FIG. 7 illustrates a side view of an inflated and deployed state of a side airbag 82 of a vehicular side airbag device 80 according to a third embodiment of the present invention. In the side airbag 82, a communication hole 84 is formed in an intermediate portion of the vertical partition portion 40A in the up-down direction, instead of the communication hole 52 according to the first embodiment. The front chamber 46 and the rear chamber 48 communicate with each other via the communication hole 84. In addition, in the side airbag 82, a vent hole 86 is formed in the upper end portion of the front bag portion 24, instead of the vent hole 54 according to the first embodiment. The front chamber 46 and the outside of the side airbag 82 communicate with each other via the vent hole 86. The vent hole 86 is provided to be offset upward from the communication hole 84 in the inflated and deployed state of the side airbag 72. Furthermore, in the side airbag 82, a vent hole 88 is formed in the rear end portion of the lower bag portion 28, so that the lower chamber 50 communicates with the outside of the side airbag 72 (in this case, the inside of the seatback 14) via the vent hole 88. The other configurations are the same as those in the first embodiment.

Even in the present embodiment, the communication hole 84 and the vent hole 86 are offset from each other in the up-down direction in the inflated and deployed state of the side airbag 72. Thus, as in the first embodiment, the gas supplied to the front chamber 46 via the communication hole 84 is not directly (linearly) discharged from the vent hole 86 to the outside.

In addition, the gas supplied to the lower chamber 50 is discharged from the vent hole 88 formed in the rear end portion of the lower bag portion 28 to the outside of the side airbag 72. Thus, as in the second embodiment, deflation of the lower bag portion 28 is inhibited from being insufficient, so that a sufficient impact absorption stroke is ensured. In addition, the gas in the lower chamber 50 is discharged from the vent hole 88 into the seatback 14, and thus the influence of the gas discharged from the vent hole 88 is not exerted on the seated occupant P.

### <Supplementary Description of Embodiments>

In the embodiments described above, regarding the communication holes 52, 74, 84 and the vent holes 54, 76, 86, 88, the examples thereof are illustrated and described. However, the present invention is not limited to these examples, and the number of communication holes and vent holes and the positions thereof may be changed as needed. For example, a configuration in which the communication hole 74 in the second embodiment or the communication hole 84 in the third embodiment is formed in (added to) the vertical partition portion 40A of the side airbag 20 in the first embodiment may also be employed.

In addition, in the embodiments described above, the lower end portion of the flow-adjusting fabric sheet 60 is configured to function as the check valve 61. However, the present invention is not limited to this configuration, and a configuration in which a check valve is provided independently of the flow-adjusting fabric sheet may also be employed.

In addition, in the embodiments described above, the configuration in which the forward extension portion 26A is provided in the upper portion of the rear bag portion 26 is employed. However, the present invention is not limited to this configuration, and a configuration in which the forward extension portion 26A is omitted, that is, a configuration in which the front bag portion 24 extends to a portion supposed to be occupied by the forward extension portion 26A may also be employed.

In addition, in the embodiments described above, the configuration in which the gas supplied into the rear bag portion 26 is supplied into the front bag portion 24 via the communication holes 52, 74, 84 is employed. However, the present invention is not limited to this configuration, and a configuration in which a branch path that extends from the flow-adjusting fabric sheet 60 is connected to the front bag portion 24 and gas is directly distributed to the inside of the front bag portion 24 from the branch path may also be employed. Even in this case, it is preferable that the diameter and the like of the branch path are set to allow the rear bag portion to be inflated and deployed earlier than the front bag portion such that the internal pressure in the rear bag portion is higher than that in the front bag portion.

Disclosure of Japanese Patent Application No. 2013-10337 is incorporated herein by reference in its entirety. In addition, all the documents, patent applications, and technical standards described in this specification are incorporated in this specification by reference in their entirety, to the same extent as if each individual document, patent application, or technical standard was specifically and individually indicated to be incorporated herein by reference.

In addition, the present invention may be implemented in various other embodiments within the scope of the invention. Needless to say, the scope of right of the present invention is limited to the embodiments described above.

## Claims

1. A vehicular side airbag device comprising:
an inflator provided in a side portion of a seatback of a vehicle seat, the side portion being an outer side portion in a vehicle-width direction, the inflator being actuated to generate gas upon detection or prediction of a side collision of a vehicle; and
a side airbag provided in the side portion, the side airbag being partitioned into a front bag portion, a rear bag portion, and a lower bag portion, the side airbag being inflated and deployed when the gas generated by the inflator provided in the rear bag portion is distributed to each of the bag portions, the front bag portion restraining front portions of a chest and an abdomen of a seated occupant, the rear bag portion restraining a shoulder and rear portions of the chest and the abdomen of the seated occupant, and the lower bag portion restraining a waist of the seated occupant, and the side airbag being provided with a check valve that restricts, by an increase in an internal pressure in the lower bag portion, a flow of the gas from the lower bag portion to the rear bag portion.

2. The vehicular side airbag device according to claim 1, wherein a forward extension portion provided in an upper portion of the rear bag portion to restrain the shoulder of the seated occupant is separated from the front bag portion by an upper partition portion extending in an obliquely upward and forward direction of the seatback in the inflated and deployed state.

3. The vehicular side airbag device according to claim 1 or 2, wherein:
the side airbag has a vent hole through which the gas in the front bag portion is discharged to an outside; and
the vent hole is positioned above an upper surface of an armrest portion provided in a door trim of a side door of the vehicle in the inflated and deployed state.

4. The vehicular side airbag device according to claim 3, wherein:
a communication hole that provides communication between the front bag portion and the rear bag portion is provided in a partition portion that separates the front bag portion and the rear bag portion from each other; and
the communication hole and the vent hole are offset from each other in an up-down direction in the inflated and deployed state.

5. The vehicular side airbag device according to any one of claims 1 to 4, wherein:
a flow-adjusting fabric sheet that distributes the gas generated by the inflator to an upper portion in the rear bag portion and an inside of the lower bag portion is provided in the rear bag; and
a lower end portion of the flow-adjusting fabric sheet functions as the check valve, the lower end portion protruding into the lower bag portion.

6. The vehicular side airbag device according to claim 2, wherein an inclination angle of the upper partition portion with respect to a front-rear direction of the seatback is set to be within a range of 30 degrees to 60 degrees.

7. The vehicular side airbag device according to any one of claims 1 to 6, wherein the lower bag portion in the inflated and deployed state is greater in length in a front-rear direction of the vehicle than the waist of the seated occupant.
